# EUROPEAN PATENT SPECIFICATION

(11) **EP 2 949 620 B1**
(45) Date of publication and mention of the grant of the patent: **27.12.2017**
(21) Application number: 14169827.4
(22) Date of filing: 26.05.2014
(51) Int. Cl.: B67D 7/34

(54) **Method and system for detecting misfuelling of a vehicle**
Verfahren und System zur Erkennung der falschen Betankung eines Fahrzeugs
Procédé et système de détection d'erreur de ravitaillement d'un véhicule

(43) Date of publication of application: 02.12.2015
(73) Proprietor: Application Solutions (Electronics and Vision) Ltd., Lewes Sussex BN7 2AQ (GB)
(72) Inventor: Weller, Dave, Lewes, Sussex BN8 6DF (GB)
(74) Representative: Büchner, Jörg

(56) References cited:
- DE-A1-102012 220 888
- JP-A- 2009 179 103

## Description

The present invention relates to a method and system for detecting misfuelling of a vehicle.

An internal combustion engine of a vehicle is, typically, designed to operate with a particular type of fuel, for example diesel or petrol. Misfuelling occurs when a person pumps petrol into the fuel tank of a vehicle with a diesel engine or, alternatively, when a person pumps diesel into the fuel tank of a vehicle with a petrol engine. Misfuelling is undesirable, since it can lead to extensive damage of the engine components requiring costly repair and replacement.

To avoid misfuelling, the inlets on petrol fuel tanks and fuel nozzles for petrol pumps are narrower than the inlets of diesel fuel tanks and fuel nozzles for diesel pumps. This prevents a fuel nozzle for a diesel pump being inserted into a petrol fuel tank thus preventing misfuelling by pumping diesel into the fuel tank of a petrol engine. However, this measure does not prevent the narrower fuel nozzle of a petrol pump being inserted into the larger inlet of a fuel tank for a diesel engine.

JP 2009 179 103 A1 discloses a fed-fuel type monitoring device for preventing erroneous fuelling only by a change on the side of a vehicle without requiring any change to a fuelling device at a fuelling station.

DE 10 2012 220 888 A1 discloses a method and system for recognising the incorrect fuelling of a vehicle.

GB 2 466 719 A discloses apparatus for detecting misfuelling which includes a signal generator in the form of a magnet which is arranged on the fuel nozzle and a magnetic field detector such as a reed switch which is mounted on the vehicle, for example proximal to the inlet of the fuel tank. If the signal detector detects the presence of the magnet of the fuel nozzle, an alarm is generated. This system may be used to prevent the user from filling the fuel tank of a diesel vehicle with petrol.

However, this apparatus requires modification of both the fuel pump and the vehicle in order to detect the presence of a petrol fuel nozzle being inserted into the fuel tank of a diesel vehicle. Therefore, apparatus and methods for detecting and preventing misfuelling of the vehicle which require less modification are desirable.

It is, therefore, an object of the invention to provide a simpler method and system for detecting misfuelling of the vehicle such that the user can be warned of an imminent misfuelling event.

This object is solved by the subject matter of the independent claims. Further improvements are the subject matter of the dependent claims.

According to the invention, a method for detecting misfuelling of the vehicle is provided that comprises: determining that the vehicle is to be fuelled; capturing an image of a fuel nozzle positioned in the vicinity of a filler cap of the vehicle using an on-vehicle image capture device; detecting at least one feature of the fuel nozzle indicative of the type of fuel dispensed by the fuel nozzle in the image; determining the type of fuel to be dispensed by the fuel nozzle from the at least one feature of the fuel nozzle detected in the image; determining if the type of fuel to be dispensed by the fuel nozzle is compatible with the vehicle, and, if the type of fuel to be dispensed by the fuel nozzle is incompatible with the vehicle, causing a warning to be produced indicative of a misfuelling event, wherein the capturing of the image of the fuel nozzle positioned in the vicinity of the filler cap of the vehicle comprises capturing a second image of two or more fuel nozzles positioned in a fuel pump using an on-vehicle image capture device as the vehicle enters a petrol station; capturing a third image of the fuel pump using an on-vehicle image capture device, and determining that one of the fuel nozzles has been removed from the fuel pump from the third image by comparing the second image with the third image and in the event that the fuel nozzle has been removed both the second and the third image are analysed to determine the type of fuel of the fuel nozzle which has been removed from the fuel pump is to dispense and whether this type of fuel is compatible with the vehicle, and if the type of fuel is incompatible with the vehicle, causing a warning to be produced indicative of a misfuelling event.

If the type of fuel to be dispensed by the fuel nozzle is determined to be compatible with vehicle, the method may end. The method for detecting misfuelling of a vehicle according to the invention may be provided by use of apparatus arranged only on or in the vehicle without requiring modification of the fuel nozzle or fuel pump. Consequently, the method is a stand-alone solution which can be used by the user of the vehicle for all types of fuel nozzles and fuel pumps. In one embodiment, the method may be used to prevent misfuelling of a vehicle with a diesel engine with petrol. In this embodiment, if it is detected that the fuel nozzle is to dispense petrol, the warning is caused to be produced, preferably by one or more components of the vehicle.

The on-vehicle image capture device, which is used to capture an image of the fuel nozzle positioned in the vicinity of the filler, may be an on-vehicle image capture device which is already present on the vehicle and is also used by other systemwithin the vehicle, for example driver assistance systems such as parking assistance systems.

The method may also be provided by retrofitting a vehicle, which already includes one or more suitable on-vehicle image capture devices, by loading a program product including computer program code that, when executed by a processor within the vehicle, causes the processor to perform the method of any one of the embodiments described herein.

In an embodiment, the program product includes information describing the location of the filler cap of the vehicle within the image captured by the on-vehicle image capture device. Therefore, an algorithm of the program product can analyse this region of the image in order to detect features of the fuel nozzle which are indicative of the type of fuel dispensed by the fuel nozzle.

Whilst the method may be used to detect the presence of a petrol fuel nozzle in the vicinity of the filler cap of a vehicle including a diesel engine, the method they also be used to detect the presence of the diesel fuel nozzle in the vicinity of the filler cap of a vehicle including a petrol engine, or the presence of a petrol fuel nozzle for petrol having an octane rating which is too low for the petrol engine of the vehicle.

The type of fuel dispensed by the fuel nozzle is determined by detecting one or more features of the fuel nozzle in the captured image which is indicative of the type of fuel dispensed by the fuel nozzle voice. An indicative feature may be the size and shape of fuel nozzle, the colour of one or more portions of the fuel nozzle or characters positioned on the fuel nozzle.

For example, unleaded petrol may be dispensed using a fuel nozzle including one or more portions which are green. If the position of the filler cap of the vehicle with respect to the on-vehicle image capture device may be known, the diameter of the fuel nozzle may be estimated from the image captured by the one vehicle image capture device. The fuel nozzles for diesel fuel, typically, have a larger diameter than fuel nozzles for petrol and the diameter of the fuel nozzle is indicative of the type of fuel. The fuel nozzle may also be marked by characters indicative of the type of fuel dispensed by the fuel nozzle, for example the octane rating, or "UNLEADED" which can be taken to refer to petrol or "DIESEL". One or more of these features may be detected and identified in the image captured by the on-vehicle image capture device, to determine the type of fuel dispensed by the fuel nozzle.

In some embodiments, more than one feature indicative of the same type of fuel that the fuel nozzle is to dispense are detected before a warning is produced in order to increase the accuracy of the detection of the type of fuel.

The features indicative of the type of fuel that a fuel nozzle is to dispense for several fuel types, may be stored in a lookup table in order to determine the type of fuel to be dispensed by the fuel nozzle. Alternatively, a simple match may be performed to determine if the detected feature matches a predetermined indicator of the fuel type. The fuel which is compatible with the vehicle may be entered manually into the system for comparison with the determined fuel type of the fuel nozzle or may be obtained by interrogation of further one or more components of the engine management system.

One or more indicators may be used to determine that the vehicle is to be fuelled. In an embodiment, if it is determined that the filler cap cover is open, this is taken as a determination that the vehicle is to be fuelled. The opening of filler cap may be determined from one or more sensors coupled to the filler cap, for example. In a further embodiment, if it is determined that the vehicle is stationary and/or the engine is switched off, it may be determined that the vehicle is to be fuelled. The determination vehicle is stationary and/or engine is switched off may be used as a first step together with the subsequent determination that the filler cap cover is open, to determine that the vehicle is to be fuelled and, therefore, that an image in the vicinity of the filler Of the vehicle should be captured using the on-vehicle image capture device, in order to detect the fuel type dispensed by the fuel nozzle positioned in the vicinity of the filler cap.

The on-vehicle image capture device may be mounted at various positions on the vehicle. A suitable on-vehicle image capture device may have a field of view which captures the filler cap or the region in the vicinity of the filler cap. According to the invention, the on-vehicle image capture device is controlled and directed such that its field of view captures the filler cap or region in the vicinity of the filler cap, if it is determined that the vehicle is to be fuelled.

In some embodiments, the on-vehicle image capture device used to capture the image is mounted on a side face of the vehicle, for example in a side mirror of the vehicle on the same side of the vehicle as the filler cap. This position may be suitable for filler caps positioned in the side face of the vehicle. In embodiments in which the filler cap is positioned in the upper surface of the boot region of the vehicle, a rear facing on-vehicle image capture device may be more suitable.

In an embodiment, the image of the fuel nozzle positioned in the vicinity of the filler cap of vehicle may be captured by taking the fuel pump into consideration. Typically, a fuel pump includes two or more fuel nozzles which may dispense different types of fuel, for example, one fuel nozzle may dispense petrol and a second fuel nozzle may dispense diesel. In this embodiment, an image of the two or more fuel nozzles positioned in a fuel pump may be captured using an on-vehicle image capture device. This image may, for example, be captured as the vehicle enters the petrol station. This image or an image sequence captured over a period for time, such as 60 seconds, may be stored for later analysis. A further image of the fuel pump may be captured using the on-vehicle image capture device and the two images compared. Comparison of the two images may be used to determine that one of the fuel nozzles has been removed from the fuel pump. At least one feature is indicative of the type of fuel to be dispensed with the fuel nozzle that has been removed from the pump may be detecting using one or more of the images captured. This embodiment is used in addition to, an image of the fuel nozzle captured from the direct vicinity of the filler cap.

The image of the petrol pump, before removal of one of the fuel nozzles, may be captured by an on-vehicle image capture device mounted at the front of the vehicle as the vehicle enters the petrol station. This image may also be captured by an on-vehicle image capture device mounted at the side of the vehicle and facing the fuel pump, after the vehicle has pulled up alongside the fuel pump. The further image may be captured by non-vehicle image capture device mounted at the side of the vehicle, for example in the side mirror of the vehicle.

If it is determined that the fuel nozzle is in the vicinity of the filler cap and that the type of fuel to be dispensed by the fuel nozzle is incompatible with the vehicle, a warning is produced to indicate to the user that the misfuelling event is imminent and prevent the user from continuing.

This warning may include a visual and/or audio output. In some embodiments, the warning comprises a visual and/or audio output from the vehicle. For example, the vehicle horn could be sounded and/or the indicator lights activated. A warning specific to the misfuelling event may also be output, such as audio voice output from the vehicle infotainment system, or a continuous beep of the warning or particular pattern of flashing of the indicator lights.

As mentioned above, the method may be performed by providing a program product comprising computer program code tangibly embodied thereon that, when executed on a processor, causes the processor to perform the method of one of the embodiments described above.

The computer program code may be stored in the memory device of the vehicle, for example vehicle infotainment system, as part of the engine management system or vehicle control systems or driver assistance systems.

A system is also provided which comprises at least one on-vehicle image capture device and computer program code tangibly embodied on a program product, the computer program code, when executed on a processor, causing the processor to perform the method of one of the embodiments described above.

Embodiments will now be described with reference to the drawings.
- Figure 1: illustrates a vehicle including a system for detecting misfuelling of the vehicle.
- Figure 2: illustrates a flow diagram of a method for detecting misfuelling of the vehicle.
- Figure 3: illustrates an image captured by non-vehicle camera for detecting misfuelling of the vehicle.

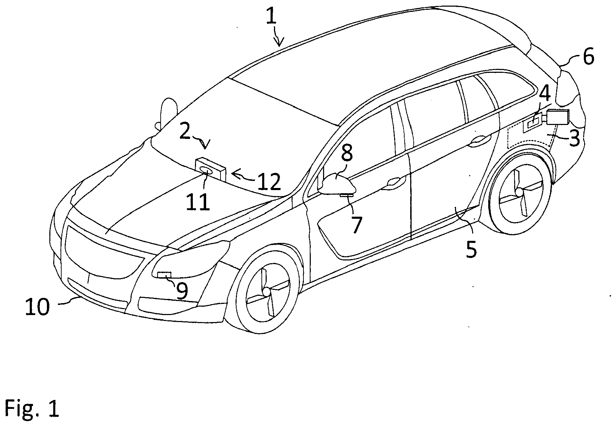

Figure 1 illustrates a vehicle 1 including a system 2 for detecting misfuelling of the vehicle 1. The vehicle 1 includes an internal combustion engine which uses a particular type of fuel. In this particular embodiment, the internal combustion engine operates on the diesel principle and, therefore, is fuelled with diesel fuel. The vehicle 1 includes a fuel tank 3 for storing diesel for consumption by the internal combustion engine. The fuel tank 3 is accessed by a filler cap 4 which, in the illustrated embodiment, is situated at the side 5 and towards the rear 6 of the vehicle 1.

The system 2 for detecting misfuelling of the vehicle 1 includes one or more on-vehicle image capture devices such as a camera 7 mounted in the side mirror 8 and a camera 9 mounted towards the front 10 of the vehicle 1. The system 2 may also single image capture device or further image capture devices. The cameras 7, 9 may be included on the vehicle 1 for the primary purpose of providing driver assistance systems, for example parking assistance systems. The further use of one or more of these cameras 7, 9 may be to prevent misfuelling of the vehicle 1.

The system 2 also includes computer program code which is tangibly in bodied on a program product 11. When the computer program code is executed by a processor, causes the processor to perform the method according to one of following embodiments in order to detect misfuelling of the vehicle 1. The program product 11 may be stored on memory means of a further system 12 of the vehicle such as a driver assistance system.

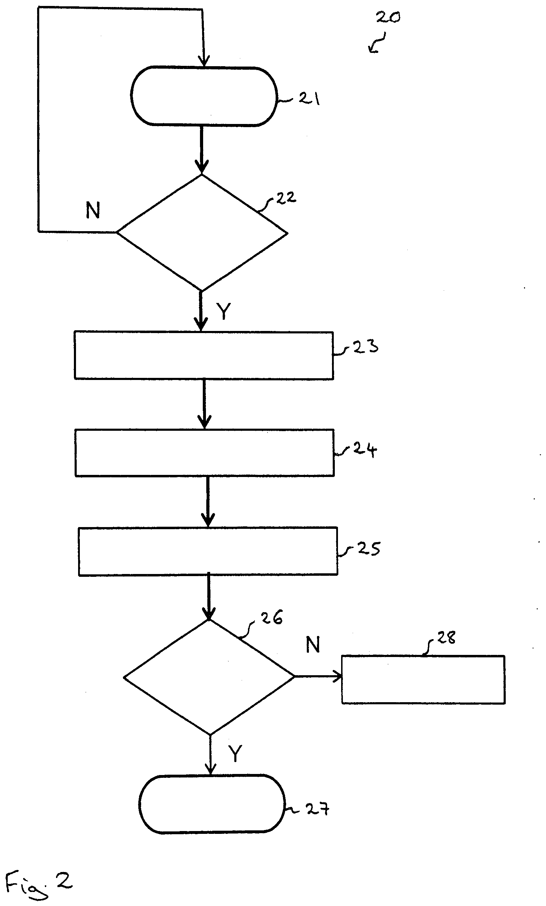

Figure 2 illustrates a flow diagram of a method 20 for detecting misfuelling of the vehicle 1 according to one embodiment of the invention which may be performed by the processor.

The method starts in box 21 and proceeds to decision diamond 22 in which it is determined whether the vehicle 1 is to be fuelled. For example, it may be determined that the filler cap 4 has been opened and/or, the vehicle 1 is stationary and/or the engine is switched off. If it is determined that the vehicle 1 is to be fuelled the method proceeds to box 23 in which an image of a fuel nozzle positioned in the vicinity of the filler cap 4 of the vehicle 1 is captured using an on-vehicle image capture device such as the camera 7 positioned in the side mirror 8. The image is analysed in box 24 to detect one or more features of the new fuel nozzle that are indicative of the type of fuel dispensed by the fuel nozzle. For example, the colour of portions of the fuel nozzle, the size and shape of the fuel nozzle or characters positioned on the fuel nozzle such as "UNLEADED" which can be taken to refer to petrol or "DIESEL" may be detected in the image. The method proceeds to box 25 where the type of fuel to be dispensed by the fuel nozzle is determined from the features of the fuel nozzle detected in the image. For example, if it is detected that the fuel nozzle is green, this indicates that fuel nozzle is to dispense petrol.

In decision diamond 26 it is determined whether the type of fuel which has been determined to be dispensed by the fuel nozzle is compatible with the vehicle 1. If the type of fuel to be dispensed by the fuel nozzle is compatible with the vehicle 1, the method ends in box 27. In the event that the type of fuel to be dispensed by the fuel nozzle is incompatible with the vehicle 1, as is the case in the present example as the fuel nozzle is determined to be unleaded petrol, whereas the engine of the vehicle 1 is a diesel engine, the processor causes a warning to be produced indicative of the misfuelling event in box 28. The warning may be produced by causing beeping of the horn or flashing of the indicator lights of the vehicle 1.

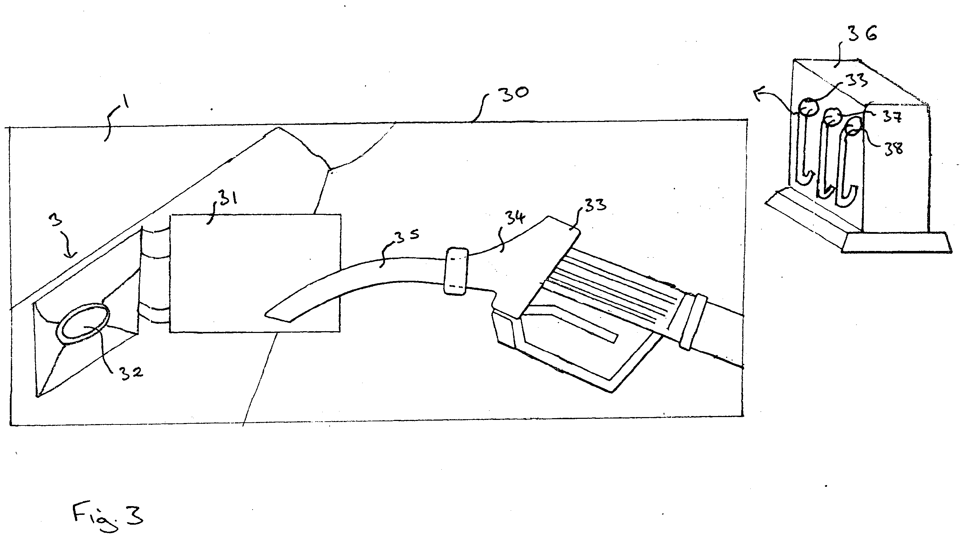

The capturing of an image in the vicinity of the filler cap 4 by the on-vehicle camera 7 will be illustrated in more detail with reference to Figure 3. Figure 3 illustrates an image 30 captured by the on-vehicle camera 7 for detecting misfuelling of the vehicle 1.

The image 30 as a field of view which encompasses the filler cap 4 positioned in a side body panel of the vehicle 1, the fill cap cover 31 and a region directly in front of the filler cap 4. The filler cap cover 31 has been opened and the filler cap removed thus opening the inlet 32 to the fuel tank 3. The image 30 also includes an image of a fuel nozzle 33 which is positioned in the immediate vicinity of the inlet 32 to the fuel tank 3. The image 30 is analysed by the computer program code to determine at least one feature of the fuel nozzle 33 which is indicative of the type of fuel that the fuel nozzle 33 is to dispense. For example, the image 30 may be analysed to determine the colour of the head 34 or the diameter of the nozzle 35.

The computer program code compares the detected features of the fuel nozzle 33 with a stored set of features which indicate the features associated with a fuel nozzle which is compatible with the type of fuel used by the vehicle 1. This this particular embodiment, the vehicle 1 uses diesel. If the fuel nozzle 33 is determined to dispense type of fuel which is incompatible with the vehicle 1, for example petrol, a warning is produced by the vehicle 1 to indicate to the user that a misfuelling event is imminent. Additional measures may be taken to determine whether the fuel nozzle 33 is to dispense the correct type of fuel for the vehicle 1. An image is captured of the fuel pump 36 which typically includes several fuel nozzles 33, 37, 38 which each dispense a different type of fuel.

The fuel pump 36 and the fuel nozzles 33, 37, 38 when stored in the fuel pump 36 are considered to be in the vicinity of the vehicle 1 since the on-vehicle cameras 7, 9 are arranged to capture an image or field of view in the facility of the vehicle 1, typically within only a few metres of the vehicle 1.
The image of the fuel pump 36 may be analysed to determine which type of fuel one or more of the fuel nozzles 33, 37, 38 is to dispense. A further image of the fuel pump 36 taken at a later point in time is analysed to determine whether one of the fuel nozzles 33, 37, 38 has been removed from the fuel pump 36. In the event that the fuel nozzle 33 has been removed from the fuel pump 36, both of these images analysed to determine which type of fuel the fuel nozzle 33 which has been removed from the fuel pump 36 is to dispense and whether this type of fuel is compatible with vehicle 1. If the type of fuel is incompatible with the vehicle 1, a warning is produced by the vehicle 1.

Therefore, a system and a method for detecting misfuelling of a vehicle are provided by use of apparatus arranged only on or in the vehicle. Modification of the fuel nozzle and/or fuel pump to detect and prevent misfuelling is not required. Consequently, the system and method provides a stand-alone solution which can be used by the user of the vehicle for all types of fuel nozzles and fuel pumps.

## Claims

1. A method (20) for detecting misfuelling of a vehicle (1), comprising:
determining (22) that the vehicle (1) is to be fuelled;
capturing (23) an image (30) of a fuel nozzle (33) positioned in the vicinity of a filler cap (4) of the vehicle (1) using an on-vehicle image capture device (7);
detecting (24) at least one feature of the fuel nozzle (33) indicative of the type of fuel dispensed by the fuel nozzle (33) in the image (30);
determining (25) the type of fuel to be dispensed by the fuel nozzle (33) from the at least one feature of the fuel nozzle (33) detected in the image (30);
determining (26) if the type of fuel to be dispensed by the fuel nozzle (33) is compatible with the vehicle (1), and
if the type of fuel to be dispensed by the fuel nozzle (33) is incompatible with the vehicle (1), causing (28) a warning to be produced indicative of a misfuelling event,
**characterised in that** the capturing (23) of the image (30) of the fuel nozzle (33) positioned in the vicinity of the filler cap (4) of the vehicle (1) comprises:
capturing a second image of two or more fuel nozzles (33, 37, 38) positioned in a fuel pump (36) using an on-vehicle image capture device (7, 9) as the vehicle enters a petrol station;
capturing a third image of the fuel pump (36) using an on-vehicle image capture device (7, 9), and determining that one of the fuel nozzles (33, 37, 38) has been removed from the fuel pump from the third image by comparing the second image with the third image and in the event that the fuel nozzle has been removed both the second and the third image are analysed to determine the type of fuel of the fuel nozzle which has been removed from the fuel pump is to dispense and whether this type of fuel is compatible with the vehicle, and if the type of fuel is incompatible with the vehicle, causing a warning to be produced indicative of a misfuelling event.

2. The method (20) according to claim 1,
**characterised in that**
the detecting (24) at least one feature of the fuel nozzle (33) that is indicative of the type of fuel dispensed by the fuel nozzle (33) comprises detecting one or more of colour, size and shape of the fuel nozzle (33) or characters positioned on the fuel nozzle (33).

3. The method (20) according to claim 1 or claim 2,
**characterised in that**
the determining (22) that the vehicle (1) is to be fuelled comprises determining that the filler cap cover (31) is open.

4. The method (20) according to one of claims 1 to 3,
**characterised in that**
the determining (22) that the vehicle (1) is to be fuelled comprises determining that the vehicle (1) is stationary.

5. The method (20) according to one of claims 1 to 4,
**characterised in that**
the determining (22) that the vehicle (1) is to be fuelled comprises determining that the engine of the vehicle (1) is switched off.

6. The method (20) according to one of claims 1 to 5,
**characterised in that**
the on-vehicle image capture device (7) used to capture the image (30) is mounted on a side face of the vehicle (1).

7. The method (20) according to claim 6,
**characterised in that**
the on-vehicle image capture device (7) used to capture is image is mounted in a side mirror (8) of the vehicle (1).

8. The method (20) according to claim 1,
**characterised in that**
the second image is captured by an on-vehicle image capture device (9) mounted at the front of the vehicle.

9. The method (20) according to claim 1,
**characterised in that**
the third image is captured by an on-vehicle image capture device (7) mounted in a side mirror of the vehicle (1).

10. The method (20) according to one of claims 1 to 9,
**characterised in that**
the warning comprises a visual and/or audio output.

11. A program product (11), comprising computer program code tangibly embodied thereon that when executed on a processor, causes the processor to perform the method of one of claims 1 to 10.

12. A system (2), comprising:
at least one on-vehicle image capture device (7, 9), and
computer program code tangibly embodied on a program product (11) that when executed on a processor, causes the processor to perform the method of one of claims 1 to 10.

## Patentansprüche

1. Verfahren (20) zur Erkennung einer Falschbetankung eines Fahrzeugs (1), umfassend:
Bestimmen (22), dass das Fahrzeug (1) zu betanken ist;
Erfassen (23) eines Bildes (30) einer Zapfpistole (33), positioniert in der Nähe eines Tankdeckels (4) des Fahrzeugs (1), unter Verwendung einer am Fahrzeug angebrachten Bilderfassungsvorrichtung (7);
Erkennen (24) mindestens eines Merkmals der Zapfpistole (33), das den Typ des von der Zapfpistole (33) abgegebenen Kraftstoffs anzeigt, in dem Bild (30);
Bestimmen (25) des Typs des von der Zapfpistole (33) abzugebenden Kraftstoffs aus dem in dem Bild (30) erkannten mindesten einen Merkmal der Zapfpistole (33);
Bestimmen (26), ob der Typ des von der Zapfpistole (33) abzugebenden Kraftstoffs kompatibel zu dem Fahrzeug (1) ist, und
falls der Typ des von der Zapfpistole (33) abzugebenden Kraftstoffs nicht kompatibel zu dem Fahrzeug (1) ist, Bewirken (28), dass eine Warnung erzeugt wird, die ein Falschbetankungsvorkommnis anzeigt,
**dadurch gekennzeichnet, dass**
das Erfassen (23) des Bildes (30) der Zapfpistole (33), positioniert in der Nähe des Tankdeckels (4) des Fahrzeugs (1), umfasst:
Erfassen eines zweiten Bildes von zwei oder mehr Zapfpistolen (33, 37, 38), positioniert in einer Kraftstoffpumpe (36), unter Verwendung einer am Fahrzeug angebrachten Bilderfassungsvorrichtung (7, 9), während das Fahrzeug in eine Tankstelle einfährt;
Erfassen eines dritten Bildes der Kraftstoffpumpe (36) unter Verwendung einer am Fahrzeug angebrachten Bilderfassungsvorrichtung (7, 9) und
Bestimmen, dass eine der Zapfpistolen (33, 37, 38) von der Kraftstoffpumpe aus dem dritten Bild abgenommen worden ist, durch Vergleichen des zweiten Bildes mit dem dritten Bild und, falls die Kraftstoffpumpe abgenommen worden ist, Analysieren sowohl des zweiten als auch des dritten Bildes, um den Typ des Kraftstoffs der von der abgebenden Kraftstoffpumpe abgenommenen Zapfpistole zu bestimmen und zu bestimmen, ob dieser Kraftstofftyp kompatibel zu dem Fahrzeug ist, und, falls der Kraftstofftyp nicht kompatibel zu dem Fahrzeug ist, Bewirken, dass eine Warnung erzeugt wird, die ein Falschbetankungsvorkommnis anzeigt.

2. Verfahren (20) nach Anspruch 1,
**dadurch gekennzeichnet, dass**
das Erkennen (24) mindestens eines Merkmals der Zapfpistole (33), das den Typ des von der Zapfpistole (33) abgegebenen Kraftstoffs anzeigt, das Erkennen der Farbe oder/und der Größe oder/und der Form der Zapfpistole (33) oder/und von auf der Zapfpistole (33) positionierten Schriftzeichen umfasst.

3. Verfahren (20) nach Anspruch 1 oder Anspruch 2,
**dadurch gekennzeichnet, dass**
das Bestimmen (22), dass das Fahrzeug (1) zu betanken ist, das Bestimmen, dass die Tankdeckelabdeckung (31) offen ist, umfasst.

4. Verfahren (20) nach einem der Ansprüche 1 bis 3,
**dadurch gekennzeichnet, dass**
das Bestimmen (22), dass das Fahrzeug (1) zu betanken ist, das Bestimmen, dass das Fahrzeug (1) steht, umfasst.

5. Verfahren (20) nach einem der Ansprüche 1 bis 4,
**dadurch gekennzeichnet, dass**
das Bestimmen (22), dass das Fahrzeug (1) zu betanken ist, das Bestimmen, dass der Motor des Fahrzeugs (1) abgestellt ist, umfasst.

6. Verfahren (20) nach einem der Ansprüche 1 bis 5,
**dadurch gekennzeichnet, dass**
die für das Erfassen des Bildes (30) verwendete am Fahrzeug angebrachte Bilderfassungsvorrichtung (7) an einer Seitenfläche des Fahrzeugs (1) montiert ist.

7. Verfahren (20) nach Anspruch 6,
**dadurch gekennzeichnet, dass**
die für das Erfassen des Bildes verwendete am Fahrzeug angebrachte Bilderfassungsvorrichtung (7) in einem Seitenspiegel (8) des Fahrzeugs (1) montiert ist.

8. Verfahren (20) nach Anspruch 1,
**dadurch gekennzeichnet, dass**
das zweite Bild von einer am Fahrzeug angebrachten Bilderfassungsvorrichtung (9), die an der Vorderseite des Fahrzeugs montiert ist, erfasst wird.

9. Verfahren (20) nach Anspruch 1,
**dadurch gekennzeichnet, dass**
das dritte Bild von einer am Fahrzeug angebrachten Bilderfassungsvorrichtung (7), die in einem Seitenspiegel des Fahrzeugs (1) montiert ist, erfasst wird.

10. Verfahren (20) nach einem der Ansprüche 1 bis 9,
**dadurch gekennzeichnet, dass**
die Warnung eine visuelle und/oder Tonausgabe umfasst.

11. Programmprodukt (11), umfassend einen materiell darauf verwirklichten Computerprogrammcode, der, wenn er auf einem Prozessor ausgeführt wird, bewirkt, dass der Prozessor das Verfahren nach einem der Ansprüche 1 bis 10 durchführt.

12. System (2), umfassend:
mindestens eine am Fahrzeug angebrachte Bilderfassungsvorrichtung (7, 9)
und
einen materiell auf einem Programmprodukt (11) verwirklichten Computerprogrammcode, der, wenn er auf einem Prozessor ausgeführt wird, bewirkt, dass der Prozessor das Verfahren nach einem der Ansprüche 1 bis 10 durchführt.

## Revendications

1. Procédé (20) de détection d'une erreur de carburant au ravitaillement d'un véhicule (1), comprenant :
déterminer (22) que le véhicule (1) doit être ravitaillé en carburant ;
capturer (23) une image (30) d'un pistolet distributeur de carburant (33) situé à proximité du bouchon de réservoir (4) du véhicule (1) au moyen d'un dispositif de capture d'images intégré à bord du véhicule (7) ;
détecter (24) au moins une caractéristique du pistolet distributeur de carburant (33) indicatrice du type de carburant délivré par le pistolet distributeur de carburant (33) observé sur l'image (30) ;
déterminer (25) le type de carburant délivré par le pistolet distributeur de carburant (33) sur la base de l'au moins une caractéristique du pistolet distributeur de carburant (33) observé sur l'image (30) ;
déterminer (26) si le type de carburant délivré par le pistolet distributeur de carburant (33) est compatible avec le véhicule (1) et
si le type de carburant délivré par le pistolet distributeur de carburant (33) est incompatible avec le véhicule (1), déclencher (28) une alerte indicatrice d'une erreur de carburant,
**caractérisé en ce que**
la capture (23) de l'image (30) du pistolet distributeur de carburant (33) situé à proximité du bouchon de réservoir (4) du véhicule (1) comprend :
la capture, à l'entrée du véhicule dans une station-service, d'une deuxième image de deux ou plusieurs pistolets distributeurs de carburant (33, 37, 38) d'une pompe à essence (36) au moyen d'un dispositif de capture d'images intégré à bord du véhicule (7, 9) ;
la capture d'une troisième image de la pompe à essence (36) au moyen d'un dispositif de capture d'images intégré à bord du véhicule (7, 9) et
déterminer qu'un des plusieurs pistolets distributeurs de carburant (33, 37, 38) a été éliminé de la pompe à essence de la troisième image à la comparaison entre la deuxième image et la troisième image ; et si un pistolet distributeur de carburant a été éliminé, l'analyse à la fois de la deuxième et de la troisième images pour identifier le type de carburant délivré par le pistolet distributeur de carburant qui a été éliminé de la pompe à essence, déterminer si ce type de carburant est compatible avec le véhicule, et si le type de carburant est incompatible avec le véhicule, déclencher une alerte indicatrice d'une erreur de carburant.

2. Procédé (20) selon la revendication 1,
**caractérisé en ce que**
la détection (24) d'au moins une caractéristique du pistolet distributeur de carburant (33) qui est indicatrice du type de carburant délivré par le pistolet distributeur de carburant (33) comprend la détection d'une ou plusieurs des caractéristiques suivantes: couleur, taille et forme du pistolet distributeur de carburant (33) ou symboles d'écriture portés par le pistolet distributeur de carburant (33).

3. Procédé (20) selon la revendication 1 ou la revendication 2,
**caractérisé en ce que**
la détermination (22) du fait que le véhicule (1) doit être ravitaillé en carburant comprend la détermination du fait que le volet couvrant le bouchon du réservoir (31) est ouvert.

4. Procédé (20) selon l'une des revendications 1 à 3,
**caractérisé en ce que**
la détermination (22) du fait que le véhicule (1) doit être ravitaillé en carburant comprend la détermination du fait que le véhicule (1) est à l'arrêt.

5. Procédé (20) selon l'une des revendications 1 à 4,
**caractérisé en ce que**
la détermination (22) du fait que le véhicule (1) doit être ravitaillé en carburant comprend la détermination du fait que le moteur du véhicule (1) est éteint.

6. Procédé (20) selon l'une des revendications 1 à 5,
**caractérisé en ce que**
le dispositif de capture d'images intégré à bord du véhicule (7) qui est utilisé pour capturer l'image (30) est monté sur une face latérale du véhicule (1).

7. Procédé (20) selon la revendication 6,
**caractérisé en ce que**
le dispositif de capture d'images intégré à bord du véhicule (7) qui est utilisé pour capturer l'image (8) est monté sur un rétroviseur latéral (8) du véhicule (1).

8. Procédé (20) selon la revendication 1,
**caractérisé en ce que**
la deuxième image est obtenue au moyen d'un dispositif de capture d'images intégré à bord du véhicule (9) monté à l'avant du véhicule.

9. Procédé (20) selon la revendication 1,
**caractérisé en ce que**
la troisième image est obtenue au moyen d'un dispositif de capture d'images intégré à bord du véhicule (7) monté sur un rétroviseur latéral du véhicule (1).

10. Procédé (20) selon l'une des revendications 1 à 9,
**caractérisé en ce que**
l'alerte comprend un signal visuel et/ou audible.

11. Produit-programme (11) comprenant un code de programme informatique mis en oeuvre de manière tangible sur celui-ci qui, quand il est exécuté sur un processeur, entraîne l'exécution, par le processeur, du procédé de l'une des revendications 1 à 10.

12. Système (2) comprenant :
au moins un dispositif de capture d'images intégré à bord d'un véhicule (7, 9)
et
un code de programme informatique mis en oeuvre de manière tangible sur un produit-programme (11) qui, quand il est exécuté sur un processeur, fait que le processeur exécute le procédé de l'une des revendications 1 à 10.
